# FASCICULE DE BREVET EUROPEEN

(11) **EP 2 117 903 B1**
(45) Date de publication et mention de la délivrance du brevet: **19.02.2014**
(21) Numéro de dépôt: 07871841.8
(22) Date de dépôt: 12.12.2007
(51) Int. Cl.: B61F 9/00, B62D 1/26

(54) **DISPOSITIF DE SÉCURITÉ ANTI-EXTRACTION POUR UN ENSEMBLE DE GUIDAGE PAR DEUX GALETS INCLINÉS ROULANT SUR UN RAIL**
ANTIEXTRAKTIONS-SICHERHEITSVORRICHTUNG FÜR EINEN FÜHRUNGSSATZ MIT ZWEI GENEIGTEN ROLLEN, DIE AUF EINER SCHIENE ROLLEN
ANTI-EXTRACTION SAFETY DEVICE FOR A GUIDANCE SET COMPRISING TWO INCLINED ROLLERS ROLLING ON A RAIL

(30) Priorité: 22.12.2006 FR 0611296
(43) Date de publication de la demande: 18.11.2009
(73) Titulaire: Lohr Industrie, 67980 Hangenbieten (FR)
(72) Inventeur: ANDRE, Jean-Luc, 67120 Molsheim (FR); LAMANNA, Franck, 67310 Romanswiller (FR)
(74) Mandataire: Metz, Paul
(86) Numéro de dépôt international: PCT/FR2007/002047
(87) Numéro de publication internationale: WO 2008/087286

(56) Documents cités:
- FR-A- 2 780 739
- FR-A1- 2 705 636
- NL-C- 9 058
- US-A- 1 397 825

## Description

La présente invention concerne un système de guidage comprenant un ensemble de guidage pour un véhicule routier guidé par deux galets inclinés roulant sur un rail et comprenant un dispositif de sécurité anti-extraction.

Le document FR-A-2780739 décrit un système conforme au préambule de la revendication 1.

Avantageusement, le dispositif de sécurité de l'ensemble de guidage selon l'invention peut également réaliser une fonction d'évacuation des objets pouvant se trouver sur la voie de guidage et gêner le guidage du véhicule.

L'invention s'applique plus particulièrement, mais non exclusivement, aux véhicules urbains de transport en commun guidés le long d'un rail de guidage au moyen d'un ensemble de guidage comportant deux galets de guidage inclinés en V.

Pour assurer leur guidage, les véhicules de transport en commun guidés de ce type comportent un ensemble de guidage qui suit en permanence un rail continu de guidage tout au long du parcours du véhicule.

Cet ensemble de guidage comporte des galets de guidage inclinés en V qui roulent sur des pistes inclinées prévues sur la partie supérieure de la tête du rail de guidage, ce rail de guidage comprenant une tête de rail à flancs en saillie sous chacun desquels se trouve un retrait.

Afin d'assurer la sécurité du véhicule et de ses passagers, il est indispensable que le contact entre l'ensemble de guidage porté par le véhicule et le rail de guidage, c'est-à-dire entre les galets de guidage et leurs pistes de roulement, soit garanti à tout moment lorsque le véhicule est en circulation.

Pour cela, les galets de guidage sont classiquement contraints contre le rail de guidage par une force de rappel élastique de rapprochement, par exemple au moyen d'un bras à ressort.

Si un tel système est suffisant en situation normale de guidage, il existe des situations exceptionnelles où un effort supérieur à la contrainte élastique arrive à s'exercer en sens contraire sur l'ensemble de guidage. Un tel effort conduit à soulever l'ensemble de guidage au-dessus du rail de guidage et à l'extraire de la zone de guidage. Les galets de guidage s'échappent du rail de guidage et le déraillement peut suivre.

Une telle situation peut par exemple se produire lorsqu'un objet quelconque se trouve sur le rail de guidage ou dans les gorges bordant latéralement le rail.

En effet, en raison de l'exposition aux intempéries et au milieu ambiant de la voie de guidage, il arrive couramment que le rail de guidage et/ou ses gorges latérales soient localement encombrés ou obstrués par des débris de toute sorte, des végétaux, de la glace, de la neige, des cailloux ou d'autres corps ou objets étrangers déposés par accident ou malveillance, qui peuvent constituer un obstacle pour le passage des galets de guidage conduisant à leur soulèvement et à leur sortie du rail.

Le soulèvement des galets de guidage et l'extraction de l'ensemble de guidage hors de la zone de guidage du rail représentent un risque inacceptable conduisant à des problèmes majeurs, notamment le déraillement de l'ensemble de guidage et par la suite du véhicule.

Pour empêcher le soulèvement et l'extraction de l'ensemble de guidage de ces véhicules, on a, dans l'art antérieur, équipé les galets de guidage de mentonnets, recouvrant les galets sur leur face extérieure et se terminant par un prolongement périphérique.

Ces mentonnets sont classiquement réalisés d'une pièce avec ou solidarisés aux galets de guidage et tournent en même temps que ces derniers.

En position d'utilisation des galets de guidage, chaque prolongement périphérique des mentonnets vient s'engager dans le retrait inférieur du rail de guidage, sous le flanc en saillie correspondant de la tête de rail.

En cas d'effort de soulèvement des galets, les prolongements périphériques constituant les mentonnets viennent buter contre les flancs en saillie de la tête du rail de guidage et s'opposent à l'extraction de l'ensemble de guidage.

Le but de l'invention est de fournir un système de guidage comprenant un ensemble de guidage comprenant un nouveau dispositif de sécurité anti-extraction, également appelé dispositif anti-soulèvement, plus efficace et plus avantageux que celui de l'art antérieur à mentonnets tournants.

Pour résoudre ce problème technique, l'invention fournit un système de guidage comprenant un ensemble de guidage comprenant un dispositif de sécurité anti-extraction pour un véhicule routier guidé par deux galets inclinés roulant sur des pistes de roulement inclinées de la partie supérieure d'une tête de rail de guidage à flancs en saillie se raccordant chacun par un retrait avec l'âme du rail.

Selon l'invention, chaque galet est protégé par une pièce de carénage fixe en rotation, l'association des deux pièces formant un ensemble de carénage dont la base comporte une extension qui se prolonge, en position d'utilisation, sous le flanc saillant correspondant du rail de guidage, de manière à s'opposer à tout effort d'extraction de l'ensemble de guidage.

Ces pièces de carénage peuvent être indépendantes ou reliées entre elles pour former un ensemble mécanique monobloc réalisé d'un seul tenant ou par assemblage des deux pièces de carénage.

Contrairement aux mentonnets de l'art antérieur, les pièces de carénage ne tournent pas avec les galets de guidage et sont fixes en rotation.

L'effort nécessaire pour réussir à provoquer l'extraction de l'ensemble de guidage selon l'invention est bien supérieur à celui devant être appliqué avec des pièces tournantes comme les galets à mentonnets de l'art antérieur.

En effet, avec le dispositif selon l'art antérieur, les mentonnets tournent avec les galets de guidage quand le véhicule avance. Lorsque ces mentonnets rencontrent un objet dans la gorge latérale bordant le rail, leur rotation favorise la montée des galets sur le rail par appui sur cet objet et la retenue dynamique en arrachement de l'ensemble de guidage s'en trouve fortement diminuée.

Avec le dispositif anti-extraction de l'ensemble de guidage selon l'invention, les extensions des pièces de carénage ne tournant pas, la résistance à l'arrachement est la même en dynamique qu'en statique. La résistance à l'arrachement en dynamique du dispositif anti-extraction de l'ensemble de guidage de la présente invention est donc bien meilleure que celle du dispositif selon l'art antérieur.

Par ailleurs, dans le système classique à galets à mentonnets, l'effort d'arrachement passe par les roulements. Pour y résister, ceux-ci doivent être très fiables et donc présenter les propriétés de pièces de sécurité. Il s'agit par exemple de roulements biconiques complexes.

Avec le dispositif de sécurité de l'ensemble de guidage selon l'invention, l'effort d'arrachement ne passe plus par les roulements. De ce fait, ils peuvent être plus simples et moins coûteux, par exemple de simples roulements à billes.

Les pièces de carénage, fixes en rotation, ne sont plus limitées à une forme circulaire de révolution. En leur donnant une forme différente adaptée, elles peuvent ainsi remplir des fonctions supplémentaires.

Les pièces de carénage présentent de préférence une forme enveloppante recouvrant la face extérieure des galets de guidage et éventuellement une partie de leur chant périphérique. En plus de leur fonction anti-extraction, elles peuvent ainsi protéger les galets, notamment des projections et de l'éjection d'objets lors du roulage.

Selon un mode de réalisation préférentiel de l'invention, la base des pièces de carénage est conformée à l'avant en un bec de relevage et d'évacuation d'objets présents sur la voie de guidage.

Avantageusement, les deux pièces de carénage peuvent être réalisées d'un seul tenant ou jumelées mécaniquement de façon à former un ensemble fonctionnel monobloc.

Pour cela, les extrémités latérales inférieures de chaque pièce de carénage se prolongent préférentiellement l'une vers l'autre pour former une liaison mécanique de jumelage et de protection avec la pièce de carénage homologue du galet incliné opposé.

On peut avantageusement relier les pièces de carénage dans une zone située à proximité du rail pour renforcer la tenue à l'écartement de leurs extensions. La résistance à l'arrachement s'en trouve fortement améliorée, car vu l'inclinaison des faces d'appui sur le rail, pour améliorer la résistance à l'arrachement, il faut entre autre améliorer la tenue à l'écartement de ces extensions.

De plus, on peut également épaissir localement ces extensions, dans toutes les zones disponibles sans engager le gabarit des gorges du rail. Ces renforcements permettent également d'améliorer la tenue en flexion latérale des extensions.

D'autres caractéristiques et avantages de l'invention apparaîtront à la lecture de la description détaillée qui va suivre, description faite en référence aux dessins annexés, dans lesquels :
- la figure 1 est une vue frontale en perspective d'un dispositif de sécurité anti-extraction d'un ensemble de guidage selon l'invention monté sur un ensemble de guidage à galets inclinés ;
- la figure 2 est une vue avant en perspective d'un dispositif *de* sécurité anti-extraction d'un ensemble de guidage selon l'invention, monté sur un ensemble de guidage à galets inclinés en prise avec un tronçon de rail de guidage ;
- la figure 3 est une vue de dessus en perspective d'un dispositif de sécurité anti-extraction d'un ensemble de guidage selon l'invention, monté sur un ensemble de guidage à galets inclinés en prise avec un tronçon de rail de guidage ;
- la figure 4 est une vue latérale en perspective d'un dispositif de sécurité anti-extraction d'un ensemble de guidage selon l'invention ;
- la figure 5 est une vue avant d'un dispositif de sécurité anti-extraction d'un ensemble de guidage selon l'invention, monté sur un ensemble de guidage à galets inclinés en prise avec un tronçon de rail de guidage ;
- la figure 6 est une vue en coupe transversale, réalisée selon le plan de coupe VI-VI représenté sur la figure 4, d'un dispositif de sécurité anti-extraction d'un ensemble de guidage selon l'invention, monté sur un ensemble de guidage à galets inclinés en prise avec un tronçon de rail de guidage ;
- la figure 7 est une vue par au-dessus en perspective d'une deuxième variante monobloc de dispositif de sécurité anti-extraction d'un ensemble de guidage selon l'invention, monté sur un ensemble de guidage à galets inclinés en prise avec un tronçon de rail de guidage ;
- la figure 8 est une vue en coupe transversale de la deuxième variante monobloc du dispositif de sécurité anti-extraction d'un ensemble de guidage selon l'invention, monté sur un ensemble de guidage à galets inclinés en prise avec un tronçon de rail de guidage.

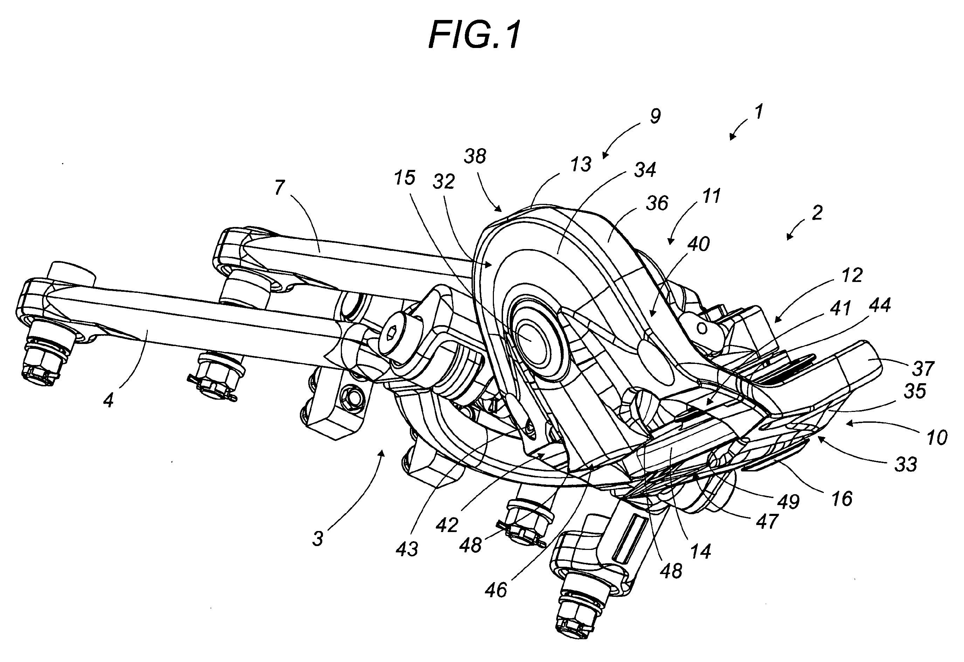

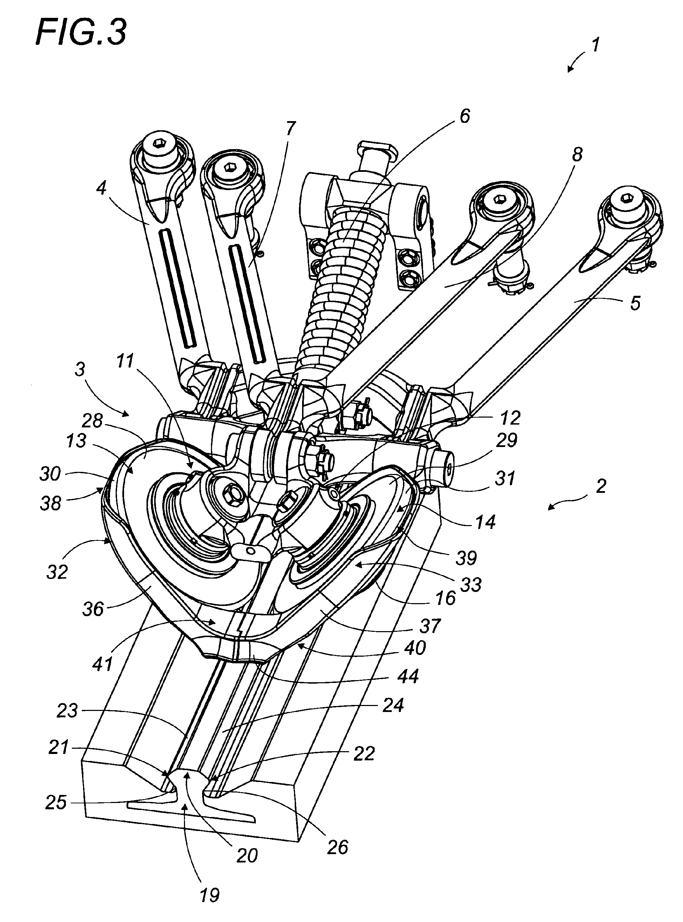

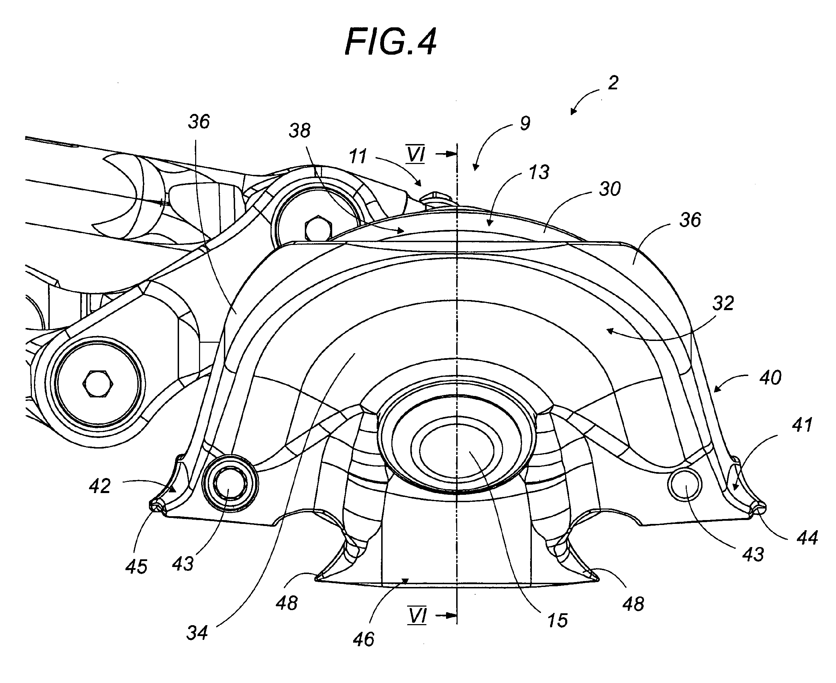

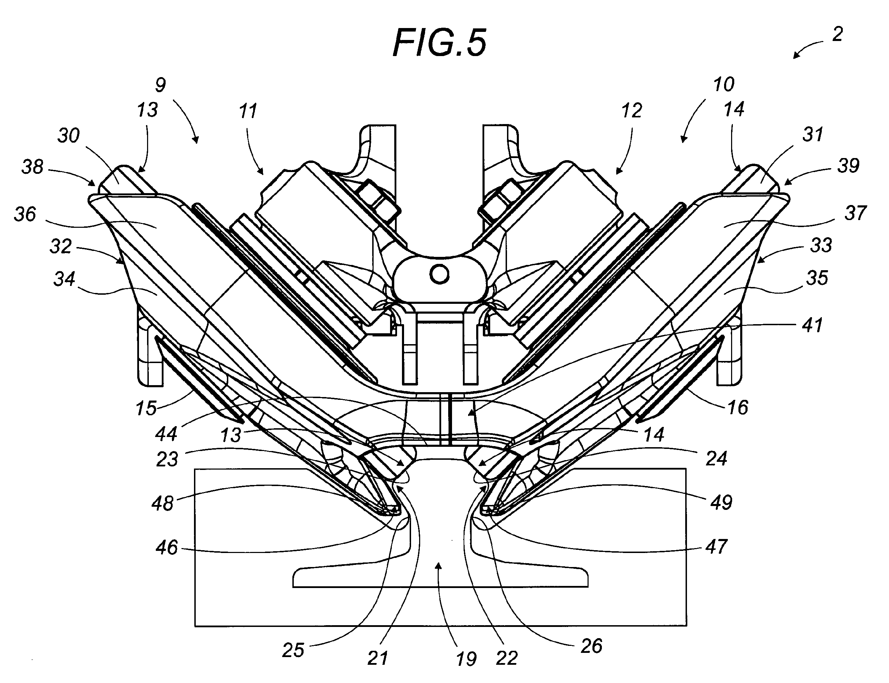

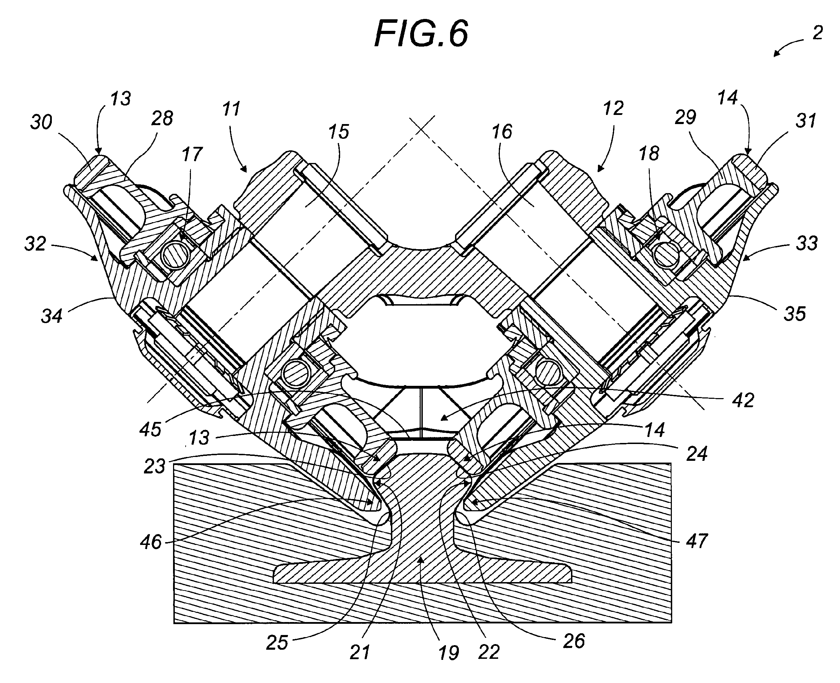

L'ensemble de guidage à dispositif de sécurité anti-extraction selon la présente invention va maintenant être décrit de façon détaillée en référence aux figures 1 à 8. Les éléments équivalents représentés sur les différentes figures porteront les mêmes références numériques.

On définira dans la suite de cette description les notions de haut et de bas, d'inférieur et de supérieur, etc., en fonction de l'orientation adoptée sur les différentes figures.

De la même façon, l'avant et l'arrière seront définis en fonction du sens de progression du véhicule.

L'invention s'applique plus particulièrement à un ensemble de guidage 1 comportant un dispositif de sécurité tel que représenté sur les figures.

Ce dernier est formé d'une tête de guidage 2, montée articulée sur un support pivotant 3 lui-même porté par le véhicule par l'intermédiaire de deux bras pivotants 4 et 5 et d'une liaison 6 à contrainte élastique par exemple par ressort. Cet équipage mobile porte la tête de guidage 2, à la manière d'un cardan et par plusieurs articulations de pivotement et un rappel par deux bras articulés 7 et 8.

Bien entendu, cet ensemble mécanique de support et d'articulation peut être remplacé par tout ensemble équivalent ou même distinct mais fonctionnellement équivalent, sans pour autant affecter la valeur inventive de la présente invention.

Selon la première variante de l'invention représentée sur les figures 1 à 6, la tête de guidage 2 est formée de deux ensembles porte-galet 9 et 10, montés chacun de façon indépendante sur un support 11 et 12 freiné en mouvements de pivotement à l'extrémité d'un axe transversal commun par la pression d'un écrou goupillé.

Les ensembles porte-galet 9 et 10 sont jumelés par des liaisons mécaniques légèrement déformables. Ils portent chacun à rotation et en contrainte élastique de rapprochement un galet incliné, respectivement 13 et 14, par l'intermédiaire d'un arbre-fusée 15, 16 sur chacun desquels est monté un roulement 17 et 18, préférentiellement à billes.

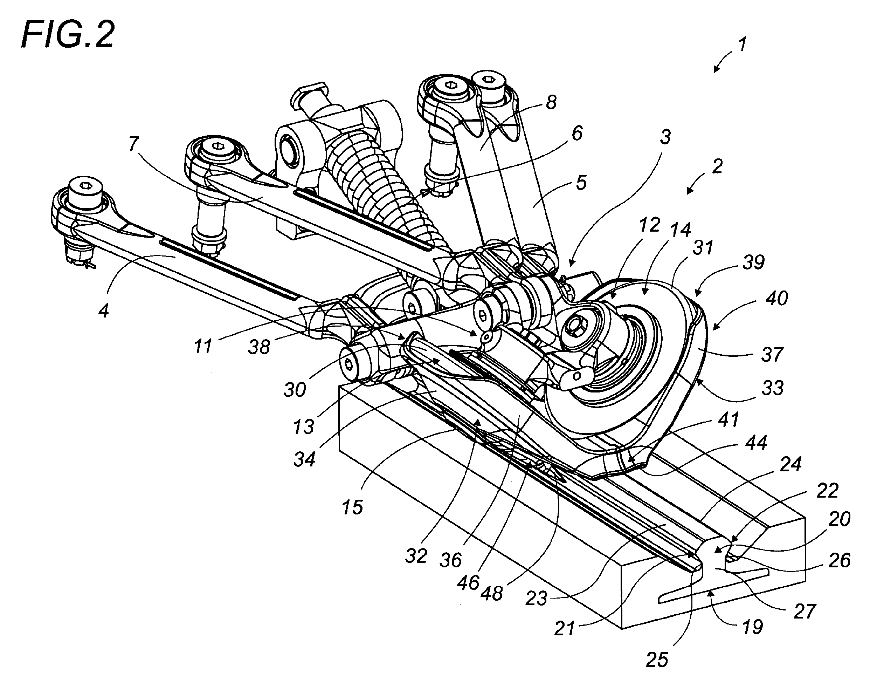

Cet ensemble constitue l'organe de guidage le long d'un rail de guidage 19 du type, comme représenté sur les figures 2, 3 et 5 à 8, à tête 20 comportant deux flancs en saillie 21 et 22 présentant chacun en partie supérieure une piste inclinée de roulement 23, 24 des galets et un retrait 25, 26 en partie inférieure dans la zone où chaque flanc en saillie rejoint l'âme 27 du rail.

Les galets sont de préférence du type à jante allégée 28 et 29 et à bande de roulement 30 et 31 en matière composite.

Chacun des galets de guidage est entouré d'une pièce de carénage 32, 33, fixe en rotation et solidaire de l'arbre-fusée 15, 16 correspondant, en vue d'assurer la protection de son galet et la sécurité du guidage par une fonction anti-extraction.

Peu importe la façon dont elles sont réellement mécaniquement constituées, les pièces de carénage et les liaisons mécaniques entre elles forment une unité fonctionnelle appelée ensemble de carénage pour la protection du guidage et la sécurité anti-extraction.

Les pièces de carénage viennent préférentiellement couvrir par une paroi latérale de protection 34, 35 la face extérieure exposée du galet correspondant, ainsi qu'éventuellement une partie de son chant périphérique au moyen d'un rebord périphérique 36, 37.

Afin de permettre de vérifier visuellement l'état des bandes de roulement 30, 31 et celui des galets et de faciliter les opérations de maintenance, les pièces de carénage 32, 33 peuvent avantageusement laisser libre une partie du chant périphérique des galets, par exemple au moyen d'une ouverture 38, 39 réalisée dans la partie supérieure de leur rebord périphérique 36, 37. Il est ainsi possible de surveiller l'état de la bande de roulement 30, 31 des galets de guidage et des galets eux-mêmes sans avoir à démonter les pièces de carénage.

Les pièces de carénage 32, 33 peuvent être mécaniquement indépendantes dans une version de base.

Pour des raisons constructives et de résistance mécanique, il apparaît préférable de réaliser les deux pièces de carénage sous la forme d'un ensemble de carénage indissociable 40 en assurant une liaison mécanique entre chaque pièce de carénage.

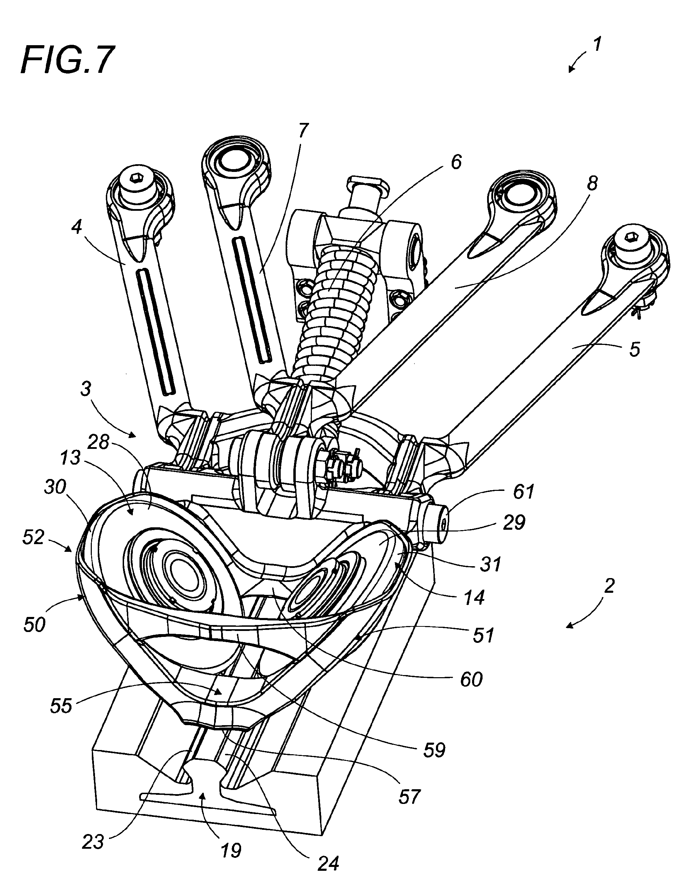

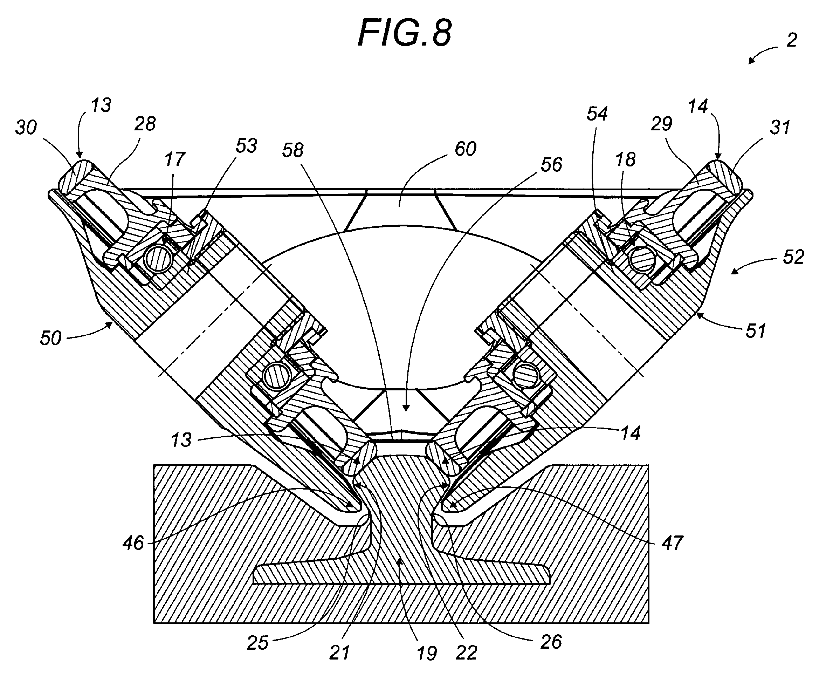

Il est possible de réaliser les deux pièces de carénage d'un seul tenant. Un exemple de réalisation d'une telle variante est représenté sur les figures 7 et 8 et sera décrit plus en détail par la suite.

On peut également, comme représenté sur les figures 1 à 6, relier mécaniquement au montage deux pièces de carénages 32, 33 indépendantes.

Ces deux pièces de carénages peuvent avantageusement être prévues symétriques de manière à n'avoir qu'un seul type de pièce à réaliser.

La liaison mécanique peut avantageusement être prévue au niveau des extrémités latérales inférieures de chacune des pièces de carénage, qui peuvent de préférence se prolonger l'une vers l'autre pour former une liaison mécanique de jumelage avec la pièce de carénage homologue du galet incliné opposé.

Dans la version symétrique des pièces de carénage, il existe ainsi deux liaisons mécaniques basses, l'une avant 41 et l'autre arrière 42, par exemple assemblées par des vis telles que 43, qui se trouvent à faible hauteur au-dessus du rail 19.

Outre la fonction mécanique de base des deux pièces de carénage 32, 33, ces liaisons 41, 42, du moins celle avant 41, peut ou peuvent permettre de chasser les objets se trouvant sur le rail de guidage 19 et servir de témoin d'usure ou de détérioration des galets. Leur forme est préférentiellement optimisée pour remplir cette fonction, avec notamment un bord inférieur, respectivement 44 et 45, relevé en becquet de dégagement.

Selon l'invention, la base de chaque pièce de carénage 32, 33 comporte une extension 46, 47 qui se prolonge, en position de guidage des galets, sous le flanc saillant 21, 22 correspondant de la tête 20 du rail de guidage 19, jusqu'au niveau du retrait 25, 26 du rail de guidage.

Cette position de l'extension 46, 47 de la partie inférieure des deux pièces de carénage fixes en rotation apporte la sécurité anti-extraction et antiarrachement recherchée.

L'extension 46, 47 des pièces de carénage, qui est préférentiellement prévue au niveau de la partie centrale inférieure de chacune des pièces de carénage, peut avantageusement remplir une autre fonction. Les extrémités avant de ces extensions 46, 47, ou les extrémités avant et arrière dans le cas de la version symétrique, peuvent avantageusement être conformées en bec 48, 49 pour permettre le relevage et l'évacuation avant le passage sous les galets d'éventuels objets présents dans les gorges du rail de guidage et dont les dimensions leur conféreraient un caractère dangereux pour l'avancée de la tête de guidage.

On a représenté une deuxième variante de l'invention sur les figures 7 et 8.

Il s'agit d'une variante monobloc à maintien des galets de guidage à partir des pièces de carénage 50, 51 ou de l'ensemble mécanique 52 formé par celles-ci.

Plus particulièrement ici, les pièces de carénage 50, 51 forment un ensemble mécanique de carénage 52 de forme générale en corbeille servant de support aux galets de guidage 13, 14.

Comme il apparaît sur la vue en coupe transversale de la figure 8, chaque pièce de carénage 50, 51 est montée sur un arbre fusée et se prolonge par une saillie cylindrique 53, 54 en cylindre creux.

Sur le pourtour extérieur de chacune de ces saillies 53, 54 est engagée à force la cage d'un roulement à billes 17, 18 solidaire de la jante allégée 28 ou 29 de chaque galet de guidage 13, 14. L'ensemble tournant est immobilisé axialement par des moyens conventionnels.

L'ensemble de carénage 52 est formé de deux pièces de carénage 50, 51 opposées, supportant chacune à rotation un galet de guidage 13, 14. Les pièces de carénage 50, 51 sont réunies transversalement par des liaisons mécaniques ou constituent un ensemble de carénage mécanique monobloc.

On retrouve de préférence des liaisons transversales basses, avant 55 et arrière 56, rigidifiant la pièce en écartement et pouvant faire office de chasse débris et objets par une forme adaptée de leur bord inférieur, respectivement 57 et 58, en becquet de dégagement.

Ces liaisons transversales basses sont préférentiellement complétées par des liaisons supérieures de renforcement, telles que 59 à l'avant et 60 à l'arrière.

A l'arrière, l'ensemble de carénage 52 est rendu solidaire des extrémités d'un axe transversal de pivotement 61 en contrainte élastique vers le bas et monté sur un support arrière 3 solidaire des bras de guidage 4 à 8.

Des articulations nécessaires au débattement de pivotement du support arrière 3 par rapport aux pièces sont en outre prévues pour permettre les mouvements d'orientation de guidage de l'ensemble pour le suivi des courbes du tracé donné par le rail de guidage.

La présente variante apporte des avantages supplémentaires tels que la simplicité de construction et une meilleure résistance des galets à l'extraction.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention.

## Revendications

1. Système de guidage (1) comprenant un ensemble de guidage pour un véhicule routier et un rail de guidage (19), le rail de guidage présentant une âme (27), une tête (20) à flancs en saillie (21, 22) se raccordant chacun par un retrait (25, 26) avec l'âme (27) du rail et des pistes de roulement inclinées (23, 24) dans la partie supérieure de la tête (20) de celui-ci, lequel ensemble de guidage comprend deux galets inclinés roulant (13, 14) sur les pistes de roulement inclinées (23, 24) du rail de guidage (19), **caractérisé en ce qu'**il comporte un dispositif de sécurité anti-extraction comprenant un ensemble de carénage (32, 33) fixe en rotation qui protège le couple des deux galets (13, 14), dont la base comporte une extension (46,47) et se prolonge pour se retrouver, en position d'utilisation, sous le flanc en saillie (21, 22) correspondant du rail de guidage (19), de manière à s'opposer à tout effort d'extraction de l'ensemble de guidage.

2. Système de guidage selon la revendication 1 **caractérisé en ce que** chaque galet (13, 14) de guidage possède une pièce de carénage (32, 33, 50, 51) fixe en rotation, dont la base comporte l'extension (46, 47).

3. Système de guidage selon la revendication 2 **caractérisé en ce que** les pièces de carénage (50, 51) sont réalisées d'un seul tenant et forment un ensemble monobloc de carénage (52).

4. Système de guidage selon la revendication 1 **caractérisé en ce que** les pièces de carénage (32, 33) sont jumelées mécaniquement de façon à former un ensemble fonctionnel monobloc de carénage (40).

5. Système de guidage selon l'une *quelconque des revendications 2 à 4* **caractérisé en ce que** les extrémités latérales inférieures de chaque pièce de carénage (32, 33, 50, 51) se prolongent l'une vers l'autre pour former une liaison mécanique de jumelage (41, 42, 55, 56) avec la pièce de carénage homologue du galet incliné opposé.

6. Système de guidage selon la revendication précédente **caractérisé en ce que** les liaisons mécaniques de jumelage (41, 42, 55, 56) présentent un bord inférieur (44, 45, 57, 58) relevé en becquet de dégagement servant également de témoin d'usure ou de détérioration des galets.

7. Système de guidage selon l'une quelconque des revendications 2 à 5 **caractérisé en ce que** l'ensemble de carénage (40, 52) porte à rotation les galets de guidage (13, 14).

8. Système de guidage selon l'une quelconque des revendications précédentes 2 à 7 **caractérisé en ce que** la base des pièces de carénage (32, 33, 50, 51) est conformée à l'avant en un bec (48, 49) de relevage et d'évacuation d'objets présents sur la voie de guidage.

9. Système de guidage selon l'une quelconque des revendications précédentes 2 à 8 **caractérisé en ce que** les pièces de carénage (32, 33, 50, 51) présentent une forme enveloppante recouvrant la face extérieure des galets de guidage (13, 14) et une partie de leur chant périphérique.

10. Système de guidage selon la revendication précédente **caractérisé en ce que** les pièces de carénage (32, 33, 50, 51) présentent en partie supérieure une ouverture (38, 39) rendant visible une partie des galets (13, 14) et *une partie* de leur bande de roulement (30, 31).

## Patentansprüche

1. Führungssystem (1) bestehend aus einer Führungsbaugruppe für ein Straßenfahrzeug und einer Führungsschiene (19), wobei die Führungsschiene eine Seele (27) aufweist, sowie einen Kopf (20) mit vorspringenden Flanken (21, 22), die jeweils über einen Rücksprung (25, 26) mit der Seele (27) der Schiene verbunden sind, und schräge Laufbahnen (23, 24) im oberen Teil des Kopfes (20), wobei die Führungsbaugruppe zwei schräge Rollen (13, 14) umfasst, die auf den schrägen Laufbahnen (23, 24) der Führungsschiene (19) rollen, **dadurch gekennzeichnet, dass** es eine Auszugssicherungsvorrichtung umfasst, die aus einer rotationsfesten Verkleidungsbaugruppe (32, 33) besteht, die das Moment der beiden Rollen (13, 14) schützt, deren Basis eine Erweiterung (46, 47) aufweist und sich verlängert, um in der Benutzungsposition unter der entsprechenden vorspringenden Flanke (21, 22) der Führungsschiene (19) zu sitzen, so dass jegliche Auszugskraft aus der Führungsbaugruppe unterbunden wird.

2. Führungssystem gemäß Anspruch 1, **dadurch gekennzeichnet, dass** jede Führungsrolle (13, 14) ein rotationsfestes Verkleidungsteil (32, 33, 50, 51) besitzt, dessen Basis die Erweiterung (46, 47) aufweist.

3. Führungssystem gemäß Anspruch 2, **dadurch gekennzeichnet, dass** die Verkleidungsteile (50, 51) aus einem Stück bestehen und eine Monoblock-Verkleidungsbaugruppe (52) bilden.

4. Führungssystem gemäß Anspruch 1, **dadurch gekennzeichnet, dass** die Verkleidungsteile (32, 33) mechanisch derart gepaart sind, dass sie eine funktionale Monoblock-Verkleidungsbaugruppe(40) bilden.

5. Führungssystem gemäß einem der Ansprüche 2 bis 4, **dadurch gekennzeichnet, dass** sich die unteren seitlichen Enden jedes Verkleidungsteils (32, 33, 50, 51) eins in Richtung des anderen verlängern, um eine mechanische Paarungsverbindung (41, 42, 55, 56) mit dem entsprechenden Verkleidungsteil der gegenüberliegenden schrägen Rolle herzustellen.

6. Führungssystem gemäß dem vorherigen Anspruch, **dadurch gekennzeichnet, dass** die mechanischen Paarungsverbindungen (41, 42, 55, 56) einen unteren Rand (44, 45, 57, 58) aufweisen, der in Form einer Spitze angehoben ist, die ebenfalls als Verschleiß- oder Beschädigungsanzeiger der Rollen dient.

7. Führungssystem gemäß einem der Ansprüche 2 bis 5, **dadurch gekennzeichnet, dass** die Verkleidungsbaugruppe (40, 52) die Führungsrollen (13, 14) rotierend trägt.

8. Führungssystem gemäß einem der vorherigen Ansprüchen 2 bis 7, **dadurch gekennzeichnet, dass** die Basis der Verkleidungsteile (32, 33, 50, 51) im vorderen Bereich die Form eines Schnabels (48, 49) zum Erkennen und Beseitigen von auf der Führungsbahn vorhandenen Objekten aufweist.

9. Führungssystem gemäß einem der vorherigen Ansprüche 2 bis 8, **dadurch gekennzeichnet, dass** die Verkleidungsteile (32, 33, 50, 51) eine ummantelnde Form aufweisen, die die Außenseite der Führungsrollen (13, 14) und einen Teil ihrer umgebenden Kante bedeckt.

10. Führungssystem gemäß dem vorherigen Anspruch, **dadurch gekennzeichnet, dass** die Verkleidungsteile (32, 33, 50, 51) am oberen Teil eine Öffnung (38, 39) aufweisen, durch die ein Teil der Rollen (13, 14) und ein Teil ihrer Lauffläche (30, 31) sichtbar werden.

## Claims

1. Guide system (1) incorporating a guidance assembly for a road vehicle and a guide rail (19), the said guide rail having a core (27), a head (20) with salient sides (21, 22), each connecting via a removal (25, 26) with the core (27) of the rail and inclined travel tracks (23, 24) in the upper part of its head (20), the which guidance system incorporates two inclined rollers (13, 14) on the inclined travel tracks (23, 24) of the guide rail (19), **characterized by** the fact that it incorporates an anti-extraction security system including a fairing assembly (32, 33) fixed in rotation that protects the pair of rollers (13, 14), of which the base incorporates an extension (46, 47) and extends so that, in usage position, it is under the corresponding salient side (21, 22) of the guide rail (19), such as to oppose any force applied to extract the guide system.

2. Guide system according to claim 1, **characterized by** the fact that each guide roller (13, 14) has a fairing part (32, 33, 50, 51) fixed in rotation, of which the base incorporates the extension (46, 47).

3. Guide system according to claim 2, **characterized by** the fact that the fairing parts (50, 51) are composed of one single piece forming a mono-block fairing assembly (52).

4. Guide system according to claim 1, **characterized by** the fact that the fairing parts (32, 33) are mechanically twinned so as to form a mono-block functional fairing assembly. (40).

5. Guide system according to any of claims 2 to 4, **characterized by** the fact that the lower lateral extremities of each fairing part (32, 33, 50, 51) extend towards each other to form a twinning mechanical link (41, 42, 55, 56) with the associated fairing part of the opposing inclined roller.

6. Guide system according to the preceding claim, **characterized by** the fact that the twinning mechanical links (41, 42, 55, 56) have a lower edge (44, 45, 57, 58) raised into a clearing lip that also acts as a wear and damage indicator for the rollers.

7. Guide system according to any of claims 2 to 5, **characterized by** the fact that the fairing assembly (40, 52) carries the guide rollers (13, 14) in rotation.

8. Guide system according to any one of the preceding claims 2 to 7, **characterized by** the fact that the base of the fairing parts (32, 33, 50, 51) is formed at the front into a raised lip (48, 49) that evacuates objects present on the guide track.

9. Guide system according to any of the preceding claims 2 to 8, **characterized by** the fact that the fairing parts (32, 33, 50, 51) have an enveloping form covering the exterior face of the guide rollers (13, 14) and part of their peripheral rim.

10. Guide system according to the preceding claim, **characterized by** the fact that the fairing parts (32, 33, 50, 51) have, at the top, an opening (38, 39) that reveals a part of the rollers (13, 14) and a part of their rolling tread (30, 31).
